# EUROPÄISCHE PATENTSCHRIFT

(11) **EP 1 546 513 B1**
(45) Veröffentlichungstag und Bekanntmachung des Hinweises auf die Patenterteilung: **16.04.2008**
(21) Anmeldenummer: 03798867.2
(22) Anmeldetag: 26.08.2003
(51) Int. Cl.: F01M 11/03, B01D 35/00

(54) **RINGFILTERELEMENT FÜR EIN FLÜSSIGKEITSFILTER**
RING FILTER ELEMENT FOR A LIQUID FILTER
ELEMENT FILTRANT ANNULAIRE POUR UN FILTRE A FLUIDE

(30) Priorität: 01.10.2002 DE 10246151
(43) Veröffentlichungstag der Anmeldung: 29.06.2005
(73) Patentinhaber: MAHLE Filtersysteme GmbH, 70376 Stuttgart (DE)
(72) Erfinder: BRIEDEN, Thomas, 59969 Hallenberg (DE); MONZIE, Benoît, 70449 Stuttgart (DE)
(74) Vertreter: Bongen, Renaud & Partner
(86) Internationale Anmeldenummer: PCT/DE2003/002843
(87) Internationale Veröffentlichungsnummer: WO 2004/031542

(56) Entgegenhaltungen:
- EP-A- 0 713 720
- EP-A- 1 229 985
- EP-A- 1 260 260
- DE-A- 3 538 589
- DE-A- 19 809 919

## Beschreibung

Die vorliegende Erfindung betrifft ein Ringfilterelement für ein Flüssigkeitsfilter, insbesondere für ein Ölfilter zum Reinigen von Schmieröl, insbesondere für eine Brennkraftmaschine eines Kraftfahrzeugs, mit den Merkmalen des Oberbegriffs des Anspruchs 1.

Ein solches Ringfilterelement ist aus DE 198 09 919 A bekannt. Dieses Ringfilterelement ist Bestandteil einer Kraftstofffiltereinrichtung, mit der Kraftstoff aus einem Kraftstofftank innerhalb dieses Tankes gereinigt wird. Diese Einrichtung umfasst ein in den Kraftstofftank austauschbar einsetzbares Filtergehäuse mit einem darin gelagerten Ringfiltereinsatz. Das gesamte Filtergehäuse ist über einen an einer Stirnseite des Filtergehäuses angeformten Stutzen an eine Kraftstoffansaugleitung angeschlossen. Den Stutzen durchdringt axial ein ungedrosselter Ablaufkanal.

Aus DE 199 51 085 A1 ist ein Ringfilterelement bekannt, das ein ringförmig angeordnetes Filtermaterial sowie wenigstens eine axiale Endscheibe, die einen exzentrisch zur Längsmittelachse des Ringfilterelements angeordneten, axial nach außen abstehenden Zapfen aufweist. Ein derartiges Ringfiltereinem Deckel des Filtergehäuses fixiert, jedoch drehbar an diesem Deckel gehaltert. Beim Abnehmen des Deckels wird das Ringfilterelement axial aus dem Filtergehäuse herausbewegt, wobei gleichzeitig der Zapfen aus dem Leerlaufkanal herausgezogen wird. Hierdurch wird erreicht, dass sich das Filtergehäuse, in der Regel noch vor dem vollständigen Abnehmen des Deckels, durch den Leerlaufkanal entleeren kann. Diese Bauweise hat den wesentlichen Vorteil, dass bei Wartungsarbeiten eine Verschmutzung der Umgebung mit der jeweiligen Flüssigkeit vermieden werden kann. Des Weiteren wird auch vermieden, dass noch nicht gefilterte Flüssigkeit in einen reinseitigen Ablauf des Filtergehäuses gelangt. Üblicherweise führt der Leerlaufkanal zu einem Vorratsbehälter. Bei einer Brennkraftmaschine ist dieser Vorratsbehälter in der Regel durch eine Ölwanne gebildet.

Aus der DE 43 06 431 C2 ist eine Einrichtung bekannt, bei der in einem Filtergehäuse ein Ringfilterelement sowie eine Zentrifuge untergebracht sind. Das Ringfilterelement dient dabei als Hauptstromfilter, während die Zentrifuge quasi als Nebenstromfilter arbeitet. Der von der Zentrifuge gefilterte Nebenstrom fließt reinseitig durch einen Auslaß des Filtergehäuses in einen Sammelbehälter, vorzugsweise in die Ölwanne der mit der Einrichtung ausgestatteten Brennkraftmaschine. Während das Hauptstromfilter das für den ordnungsgemäßen Betrieb der Brennkraftmaschine benötigte Schmieröl vergleichsweise grob filtert, kann mit Hilfe der Nebenstromzentrifuge eine relativ feine Filterwirkung erzielt werden. der mit der Einrichtung ausgestatteten Brennkraftmaschine. Während das Hauptstromfilter das für den ordnungsgemäßen Betrieb der Brennkraftmaschine benötigte Schmieröl vergleichsweise grob filtert, kann mit Hilfe der Nebenstromzentrifuge eine relativ feine Filterwirkung erzielt werden.

Die vorliegende Erfindung beschäftigt sich mit dem Problem, ein gattungsgemäßes Ringfilterelement in einer verbesserten Ausführungsform mit einer erhöhten Funktionalität zu schaffen.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in den Zapfen einen Ablaufkanal zu integrieren, durch den im Betrieb eines mit dem gattungsgemäßen Ringfilterelement ausgestatteten Filters Flüssigkeit z.B. von der Reinseite des Ringfilterelements gedrosselt in den jeweiligen Kanal gelangen kann, in den der Zapfen eingesteckt ist. Auf diese Weise kann eine gezielte, gedrosselte Ableitung von Flüssigkeit in denjenigen Kanal durchgeführt werden, der beispielsweise bei einem Ringfilterelement nach DE 199 51 085 A1 durch den dortigen Zapfen verschlossen ist. Diese Funktion ist für bestimmte Anwendungen vorteilhaft.

Von besonderem Interesse ist eine Ausführungsform, bei welcher das Ringfilterelement als Teil- oder Nebenstromfilter ausgebildet ist oder ein solches umfasst. In diesem Fall kann der Ablaufkanal hinsichtlich seines Dürchströmungswiderstands derart als Drossel ausgebildet werden, dass ein das Nebenstromfilter durchströmender Nebenstrom auf einen vorbestimmten Volumenstrom begrenzt ist oder auf einen vorbestimmten Anteil an einem aus dem Teil- oder Nebenstrom und einem Hauptstrom gebildeten Gesamtstrom begrenzt ist. Durch eine derart gezielte Dimensionierung des Ablaufkanals erfüllt dieser eine Zusatzfunktion, indem er nicht nur die Ableitung eines Teil- oder Nebenstroms ermöglicht, sondern diesen auch bezüglich seines Volumenstroms begrenzt.

Vorzugsweise bildet der Ablaufkanal die Drossel oder der Ablaufkanal umfasst oder enthält die Drossel. Mit Hilfe der erfindungsgemäß eingesetzten Drossel kann der Durchströmungswiderstand des Ablaufkanals relativ exakt und reproduzierbar eingestellt werden.

Bei einer anderen Ausführungsform kann der Ringfiltereinsatz ein zentrales Rohr aufweisen, das radial zwischen sich und dem Filtermaterial einen Ringraum ausbildet, der mit dem Ablaufkanal kommuniziert. Bei dieser Bauweise ist der Ringraum durch das Rohr von einem zentralen Innenraum des Rohrs entkoppelt, wodurch es möglich ist, dem Ringraum und dem Innenraum unterschiedliche Funktionen zuzuordnen. Insbesondere kann bei einer Weiterbildung die mit dem Zapfen ausgestattete Endscheibe eine zentrale Öffnung aufweisen, die mit dem genannten Innenraum kommuniziert. Bei einem entsprechend aufgebauten Filtergehäuse kann somit ein Hauptstrom durch den Innenraum des als Nebenstromfilter dienenden Ringfilterelements geleitet werden, während der Nebenstrom durch den Ringraum und den erfindungsgemäßen Ablaufkanal abfließen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen, jeweils schematisch,
- Fig. 1: einen Längsschnitt durch ein erfindungsgemäßes Ringfilterelement,
- Fig. 2: einen Längsschnitt wie in Fig. 1, jedoch bei einer anderen Ausführungsform.

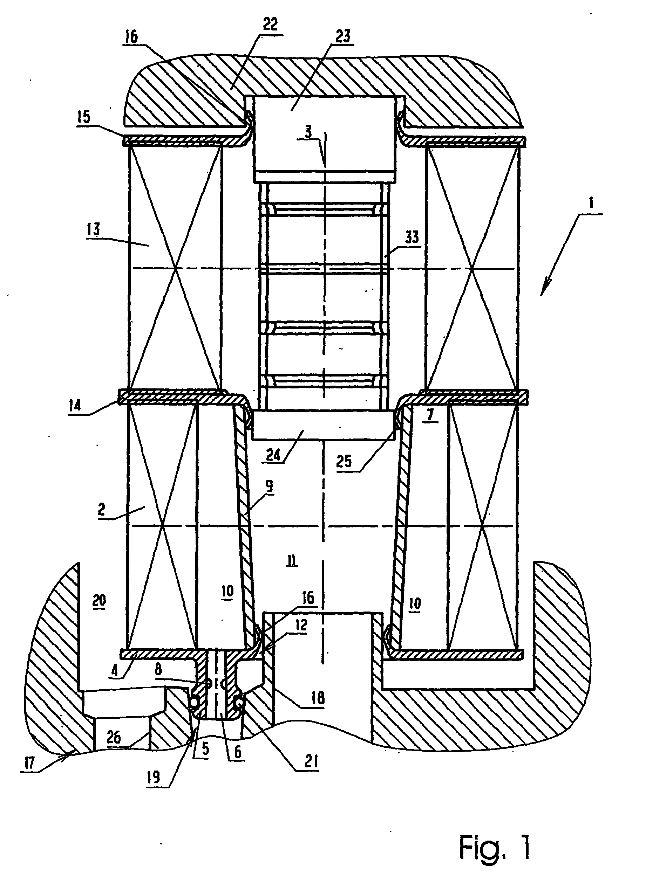

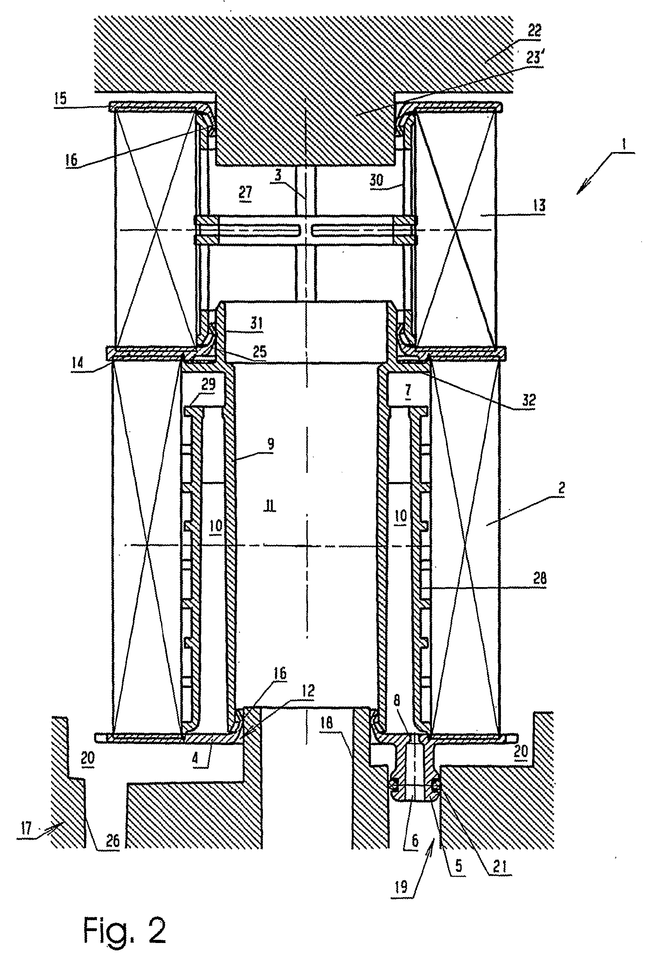

Entsprechend den Fig. 1 und 2 umfasst ein erfindungsgemäßes Ringfilterelement 1 ein Filtermaterial 2, das bezüglich einer Längsmittelachse 3 des Ringfilterelements 1 ringförmig und koaxial angeordnet ist. Das Filtermaterial 2 besteht dabei üblicherweise aus einem sternförmig gefalteten oder plissierten Papier oder Vlies. Des Weiteren besitzt das Ringfilterelement 1 wenigstens eine Endscheibe 4, die an einem axialen Ende des Filtermaterials 2 angebracht ist. Dabei sind das Filtermaterial 2 und die Endscheibe 4 in üblicherweise dicht miteinander verbunden, insbesondere verklebt oder verschweißt.

Die Endscheibe 4 besitzt exzentrisch zur Längsmittelachse 3 einen Zapfen 5, der auf der vom Filtermaterial 2 abgewandten Seite von der Endscheibe 4 absteht. Zweckmäßig steht der Zapfen 5 axial, also parallel zur Längsmittelachse 3 von der Endscheibe 4 ab. Erfindungsgemäß ist nun in den Zapfen 5 ein Ablaufkanal 6 integriert, der den Zapfen 5 und die zugehörige Endscheibe 4 durchdringt. Die Anordnung des Zapfens 5 erfolgt dabei so, dass der Ablaufkanal 6 den Zapfen 5 und die Endscheibe 4 radial neben dem Filtermaterial 2 durchdringt.

Bei den hier gezeigten bevorzugten Ausführungsformen ist der Zapfen 5 so angeordnet, dass der Ablaufkanal 6 mit einem vom Filtermaterial 2 umringten oder umschlossenen Innenraum 7 des Ringfilterelements 1 kommuniziert. Bei einem von radial außen nach radial innen durchströmten Filtermaterial 2 entspricht dieser Innenraum 7 der Reinseite des Ringfilterelements 1.

Zweckmäßig durchdringt der Ablaufkanal 6 den Zapfen 5 zentrisch und/oder axial, also parallel zur Längsmittelachse 3.

Grundsätzlich kann der Ablaufkanal 6 so bemessen sein, dass er bei seiner Durchströmung eine Drossel bildet. Bei den hier gezeigten Ausführungsformen ist im Ablaufkanal 6 durch eine Querschnittsreduzierung eine Drossel 8 ausgebildet, welche die den Ablaufkanal 6 durchströmende Strömung drosselt.

Bei der Ausführungsform gemäß Fig. 1 ist der Ringfiltereinsatz 1 im Bereich seines Filtermaterials 2 zargenlos ausgebildet. Bei der Ausführungsform gemäß Fig. 2 weist der Ringfiltereinsatz 1 eine radial innenliegende Innenzarge 28 auf, an der sich das Filtermaterial 2 radial abstützt. Bei der Ausführungsform gemäß Fig. 2 bildet die Innenzarge 28 gleichzeitig ein Steigrohr, so dass die das Filtermaterial 2 durchdringende Flüssigkeit reinseitig erst entlang der Steigrohr-Innenzarge 28 nach oben aufsteigen und einen Überlauf 29 am oberen Ende der Steigrohr-Innenzarge 28 überwinden muss, bevor die gereinigte Flüssigkeit in das Innere der Steigrohr-Innenzarge 28 überströmen kann. Ebenso kann bei einer anderen Ausführungsform eine radial durchströmbare Innenzarge vorgesehen sein.

Bei den hier gezeigten bevorzugten Ausführungsformen enthält das Ringfilterelement 1 im Bereich des Filtermaterials 2 ein zentrales Rohr 9, das konzentrisch zur Längsmittelachse 3 angeordnet ist. Die Positionierung des Rohrs 9 erfolgt dabei so, dass sich einerseits radial zwischen dem Rohr 9 und dem Filtermaterial 2 ein Ringraum 10 ausbildet und andererseits der Ablaufkanal 6 mit diesem Ringraum 10 kommuniziert. Darüber hinaus trennt das Rohr 9 den Ringraum 10 von einem zentralen Innenraum 11 des Rohrs 9. Die mit dem Zapfen 5 ausgestattete Endscheibe 4 besitzt außerdem eine zentrale Öffnung 12, die mit dem zentralen Innenraum 11 des Rohrs 9 kommuniziert.

Bei der Ausführungsform gemäß Fig. 2 ist der Ringraum 10 radial zwischen der als Steigrohr ausgebildeten Innenzarge 28 und dem Rohr 9 ausgebildet. Die Steigrohr-Innenzarge 28 ist an ihrem vom Überlauf 29 abgewandten Ende an der mit dem Zapfen 5 ausgestatteten Endscheibe 4, insbesondere durch Einplastifizieren, befestigt.

Das Rohr 9 kann - wie hier - separat von der Endscheibe 4 hergestellt und mit dieser, vorzugsweise dicht, verbunden sein. Ebenso kann das Rohr 9 mit der Endscheibe 4 oder mit einer anderen Scheibe (s.u.) einteilig bzw. integral hergestellt sein.

Zweckmäßig ist das Filtermaterial 2 zum Filtern eines Teil- oder Nebenstroms ausgebildet und wird daher im folgenden als Teil- oder Nebenstrom-Filtermaterial 2 bezeichnet. Dementsprechend ist das Ringfilterelement 1 als Teil- oder Nebenstromfilter ausgebildet oder umfasst ein solches Nebenstromfilter. Bei der hier gezeigten Ausführungsform besitzt das Ringfilterelement 1 ein weiteres Filtermaterial 13, das zum Filtern eines Hauptstroms bzw. eines anderen Teilstroms ausgebildet ist. Dementsprechend wird das weitere Filtermaterial 13 im folgenden als Hauptstrom-Filtermaterial 13 bezeichnet. Dieses Hauptstrom-Filtermaterial 13 ist ebenfalls ringförmig und koaxial zur Längsmittelachse 3 des Ringfilterelementes 1 angeordnet. Außerdem ist das Hauptstrom-Filtermaterial 13 zum Nebenstrom-Filtermaterial 2 axial benachbart angeordnet.

Auch das Hauptstrom-Filtermaterial 13 ist bei der Variante gemäß Fig. 1 zargenlos dargestellt. Im Unterschied dazu ist bei der Ausführungsform gemäß Fig. 2 eine Innenzarge 30 zur Abstützung des Hauptstrom-Filtermaterials 13 vorgesehen.

Bei den hier gezeigten Ausführungsformen sind die einander zugewandten axialen Enden der beiden Filtermaterialien 2 und 13 an einer gemeinsamen Mittelscheibe 14 befestigt, insbesondere verklebt oder verschweißt, so dass diese Mittelscheibe 14 die beiden Filtermaterialien 2, 13 axial voneinander trennt. Die Mittelscheibe 14 ist ebenfalls als zentral offene Scheibe ausgebildet.

Das Ringfilterelement 2 besitzt an der vom Nebenstrom-Filtermaterial 2 abgewandten axialen Stirnseite des Hauptstrom-Filterelements 13 eine weitere Endscheibe 15 die ebenfalls als zentral offene Endscheibe 15 ausgebildet ist. Die beiden offenen Endscheiben 4, 15 sind radial innen mit Radialdichtungen 16 ausgestattet.

Bei der hier gezeigten Ausführungsform bildet das Ringfilterelement 1 somit eine integrale Einheit aus einem Nebenstromfilter und einem Hauptstromfilter. Dieses einheitliche Ringfilterelement 1 kann komplett in ein hier nur teilweise dargestelltes Filtergehäuse 17 eingesetzt bzw. aus diesem herausgezogen werden.

Bei einer anderen, nicht gezeigten Ausführungsform enthält das Ringfilterelement 1 nur das Nebenstromfilter, während dann das Hauptstromfilter durch ein separates Ringfilterelement gebildet ist. Bei dieser alternativen Ausführungsform sind dann an Stelle der Mittelscheibe 14 zwei separate Endscheiben vorgesehen, von denen die eine fest mit dem Nebenstrom-Filtermaterial 2 und die andere fest mit dem Hauptstrom-Filtermaterial 13 verbunden ist. Zweckmäßig sind diese Endscheiben dann so gestaltet, dass die beiden separaten Ringfilterelemente über diese Endscheiben miteinander verbindbar sind. Zweckmäßig erfolgt diese Verbindung lösbar, insbesondere als Clips- oder Rastverbindung. Die beiden Ringfilterelemente können dann so miteinander gekoppelt werden, dass Hauptstromfilter und Nebenstromfilter gemeinsam aus dem Filtergehäuse 17 herausnehmbar sind.

Das erfindungsgemäße Ringfilterelement 1 funktioniert wie folgt:
Das Ringfilterelement 1 wird in das im wesentlichen aufrecht stehend angeordnete Filtergehäuse 17 in Richtung seiner Längsachse 3 von oben nach unten eingeführt. Dabei dringt ein zentraler Ablaufstutzen 18, der am Boden des Filtergehäuses 17 ausgebildet ist, in die zentrale Öffnung 12 der vorausgehenden Endscheibe 4 ein. Die Radialdichtung 16 dieser Endscheibe 4 kommt dabei radial dichtend an diesem Stutzen 8 außen zur Anlage. Beim Einsetzen des Ringfilterelements 1 in das Filtergehäuse 17 dringt außerdem der Zapfen 5 in einen ebenfalls am Boden des Filtergehäuses 17 ausgebildeten Leerlaufkanal 19 ein und dichtet diesen gegenüber einem Zulaufraum 20 des Filtergehäuses 17 ab. Zu diesem Zweck enthält der Zapfen 5 eine radial wirkende Dichtung 21.
Das Filtergehäuse 17 ist mit einem hier nur teilweise dargestellten Deckel 22 verschließbar, wobei am Deckel 22 eine Zarge 33 ausgebildet oder befestigt ist, die einen zentralen Stutzen 23 besitzt, der in die zentrale Öffnung der dem Dekkel 22 zugewandten Endscheibe 15 hineinragt. Die Radialdichtung 16 dieser Endscheibe 15 kommt dabei radial dichtend an diesem Stutzen 23 außen zur Anlage.

Bei der Ausführungsform gemäß Fig. 1 ragt die Zarge 33 mit ihrem, vom Deckel 22 abgewandten Ende 24 bis etwa auf die Höhe der Mittelscheibe 14 in das Ringfilterelement 1 hinein. Die Mittelscheibe 14 stützt sich über einen Stützrand 25 radial an diesem Ende 24 der Zarge 23 ab, wodurch das Ringfilterelement 1 eine erhöhte Stabilität gegenüber den im Betrieb auftretenden Druckdifferenzen zwischen Rohseite und Reinseite besitzt.

Im Unterschied dazu ist bei der Ausführungsform gemäß Fig. 2 besitzt der Stutzen 23 am Deckel 22 ausgebildet. Die Mittelscheibe 14 stützt sich über ihren Stützrand 25 an einem stutzenartigen Fortsatz 31 ab, der am Rohr 9 ausgebildet ist. Das Rohr 9 besitzt bei dieser Ausführungsform am Übergang zum Fortsatz 31 außerdem einen radial abstehenden Kragen 32, der sich radial bis zum Nebenstrom-Filtermaterial 2 erstreckt. Der Kragen 32 ist außerdem, insbesondere durch Einplastifizieren, mit der Mittelscheibe 14 verbunden. Um für den Fall, dass zwischen dem Rohr 9 und der Mittelscheibe 14 Leckagen auftreten können, durch welche die Reinseite des Hauptstrom-Filtermaterials 13 mit der Reinseite des Nebenstrom-Filtermaterials 2 kommuniziert, kann der Stützrand 25 bei den Ausführungsformen der Fig. 1 und 2 als radial wirkende Dichtung ausgebildet sein.

Der Zulaufraum 20 des Filtergehäuses 17 wird über einen ebenfalls im Boden des Filtergehäuses 17 ausgebildeten Zulaufkanal 26 mit ungefilterter Flüssigkeit versorgt, die im Zulaufraum 20 ansteigt und das Ringfilterelement 1, also beide Filtermaterialien 2 und 13 umspült. Bei einer bevorzugten Anwendung des vorliegenden Ringfilterelements 1 kommt der Zulaufkanal 26 von einem Rücklauf eines Schmierölkreises einer Brennkraftmaschine, insbesondere eines Kraftfahrzeugs. Das Schmieröl durchdringt die Filtermaterialien 2 und 13 radial von außen nach innen, so dass die Filtermaterialien 2, 13 jeweils eine radial außenliegende Rohseite von einer radial innenliegenden Reinseite trennen. Der durch das Hauptstrom-Filtermaterial 13 strömende Hauptstrom gelangt von der Reinseite des Hauptstrom-Filtermaterials 13, also von einem vom Hauptstrom-Filtermaterial 13 umschlossenen Innenraum 27 in den zentralen Innenraum 11 des Rohrs 9 und von diesem in den Ablaufstutzen 18 des Filtergehäuses 17. Der Ablaufstutzen 18 bildet somit den reinseitigen Auslaß des Filtergehäuses 17, der bei der vorgenannten bevorzugten Anwendungsform zu einem Vorlauf des Schmierölkreises der Brennkraftmaschine führt. Während somit die Durchströmung des Hauptstrom-Filtermaterials 13 den Hauptstrom der zu filternden Flüssigkeit bildet, wird die restliche Flüssigkeit, also der Nebenstrom durch das Nebenstrom-Filtermaterial 2 geführt. Der Nebenstrom gelangt somit nach dem Nebenstrom-Filtermaterial 2 in den Ringraum 10 und kann aus diesem über den erfindungsgemäßen Ablaufkanal 6 in den Leerlaufkanal 19 austreten. Der Leerlaufkanal 19 kommuniziert bei dem vorgenannten Beispiel mit einem Schmieröl-Sammelbehälter, insbesondere mit einer Ölwanne der Brennkraftmaschine.

Durch die Dimensionierung des Ablaufkanals 6 kann dessen Durchströmungswiderstand bestimmt werden. Entsprechend einer vorteilhaften. Ausführungsform erfolgt die Dimensionierung des Ablaufkanals 6 hinsichtlich seines Durchströmungswiderstands so, dass sich für den Nebenstrom ein vorbestimmter Volumenstrom bzw. ein vorbestimmter Anteil, z.B. etwa 10 %, an einem Gesamtstrom, der sich aus dem Nebenstrom und dem Hauptstrom zusammensetzt, einstellt. Insbesondere über die Drossel 8 kann der Durchströmungswiderstand des Ablaufkanals 6 relativ exakt für einen vorgegebenen Betriebspunkt definiert werden.

Ein wesentlicher Vorteil des erfindungsgemäßen Ringfilterelements 1 wird außerdem darin gesehen, dass es, insbesondere in den hier dargestellten Bauweisen mit integriertem Haupt- und Nebenstromfilter, wahlweise an Stelle eines herkömmlichen Ringfilterelements, dessen Zapfen 5 keinen Ablaufkanal 6 enthält, in das Filtergehäuse 17 einsetzbar ist, ohne dass am Filtergehäuse 17 irgendwelche besonderen Vorkehrungen dafür getroffen werden müssen. Auf diese Weise ist es insbesondere möglich, einen Schmierölkreis, der bislang kein Nebenstromfilter aufgewiesen hat, nachträglich und optional mit einem solchen auszustatten, ohne dass hierzu das Filtergehäuse 17 ausgetauscht werden müsste.

Die ursprüngliche Funktion des Zapfens 5 bleibt auch beim erfindungsgemäßen Ringfilterelement 1 erhalten, denn beim Herausnehmen des Ringfilterelements 1 wird der Zapfen 5 wieder aus dem Leerlaufkanal 19 herausgezogen, so dass sich der Zuströmraum 20 durch den dann geöffneten Leerlaufkanal 19 entleeren kann. Das Herausnehmen und Austauschen des Ringfilterelements 1 wird dadurch erheblich vereinfacht. Zweckmäßig kann hierbei der Deckel 22 axial fest, jedoch drehbar mit dem Ringfilterelement 1 bzw. mit dem Hauptstrom-Ringfilterelement gekoppelt sein, damit beim Abziehen des Deckels 22 der Zapfen 5 aus der Leerlauföffnung 19 herausgezogen wird.

Für den Stillstand des Fluidkreises, also z.B. bei ausgeschalteter Brennkraftmaschine dient das Rohr 9 als inneres Steigrohr für den Hauptstrom und verhindert ein leerlaufen der Reinseite 27 des Hauptstrom-Filtermaterials 13.

## Patentansprüche

1. Ringfilterelement für ein Flüssigkeitsfilter, insbesondere für ein Ölfilter zum Reinigen von Schmieröl, insbesondere für eine Brennkraftmaschine eines Kraftfahrzeugs, mit
- einem ringförmig angeordneten Filtermaterial (2),
- wenigstens einer das Filtermaterial (2) stirnseitig dichtenden Endscheibe (4), die einen exzentrisch zur Längsmittelachse (3) des Ringfilterelements (1) angeordneten, nach außen abstehenden Zapfen (5) aufweist,
- einem Ablaufkanal (6), der radial neben dem Filtermaterial (2) den Zapfen (5) und die zugehörige Endscheibe (4) durchdringt und mit einem vom Filtermaterial (2) umringten Innenraum (7) des Ringfilterelementes (1) kommuniziert, wobei dieser Innenraum (7) auf der Reinseite des Ringfilterelementes (1) liegt,
**dadurch gekennzeichnet,**
**dass** an oder in einem Austrittsende des Ablaufkanals (6) oder stromauf des Ablaufkanals (6) eine Drossel (8) angeordnet oder ausgebildet ist.

2. Ringfilterelement nach Anspruch 1 oder 2,
**dadurch gekennzeichnet,**
**dass** der Ablauf (6) eine Drossel (8) bildet oder aufweist.

3. Ringfilterelement nach Anspruch 1,
**dadurch gekennzeichnet,**
**dass** das Ringfilterelement (1) als Nebenstromfilter ausgebildet ist.

4. Ringfilterelement nach Anspruch 3,
**dadurch gekennzeichnet,**
**dass** das Nebenstromfilter an einer vom Zapfen (5) abgewandten Endscheibe mit einem als Hauptstromfilter ausgebildeten Ringfilterelement verbindbar ist, derart, dass Nebenstromfilter und Hauptstromfilter gemeinsam aus einem Filtergehäuse (17) herausnehmbar sind.

5. Ringfilterelement nach Anspruch 3 oder 4,
**dadurch gekennzeichnet,**
- **dass** das Filtermaterial (2) zum Filtern eines Nebenstroms ausgebildet ist,
- **dass** das Ringfilterelement (1) ein weiteres Filtermaterial (13) aufweist, das ringförmig und koaxial zur Längsmittelachse (3) des Ringfilterelements (1) sowie axial benachbart zum Nebenstrom-Filtermaterial (2) angeordnet und zum Filtern eines Hauptstroms ausgebildet ist,
- **dass** Nebenstrom-Filtermaterial (2) und Hauptstrom-Filtermaterial (13) eine gemeinsame Mittelscheibe (14) aufweisen.

6. Ringfilterelement nach einem der Ansprüche 3 bis 5,
**dadurch gekennzeichnet,**
**dass** der Ablaufkanal (6) hinsichtlich seines Durchströmungswiderstands so dimensioniert ist, dass ein das Nebenstromfilter durchströmender Nebenstrom auf einen vorbestimmten Volumenstrom oder auf einen vorbestimmten Anteil an einem aus dem Nebenstrom und einem Hauptstrom gebildeten Gesamtstrom begrenzt ist.

7. Ringfilterelement nach einem der Ansprüche 3 bis 6,
**dadurch gekennzeichnet,**
**dass** das Ringfilterelement (1) eine Innenzarge (28) aufweist, an der sich das Filtermaterial (2) radial abstützt.

8. Ringfilterelement nach einem der Ansprüche 3 bis 7,
**dadurch gekennzeichnet,**
- **dass** das Ringfilterelement (1) ein zentrales Rohr (9) aufweist,
- **dass** radial zwischen dem Rohr (9) und dem Filtermaterial (2) ein Ringraum (10) ausgebildet ist,
- **dass** der Ablaufkanal (6) mit dem Ringraum (10) kommuniziert.

9. Ringfilterelement nach einem der Ansprüche 3 bis 8,
**dadurch gekennzeichnet,**
- **dass** die mit dem Zapfen (5) ausgestattete Endscheibe (4) eine zentrale Öffnung (12) aufweist,
- **dass** das Rohr (9) einen mit der zentralen Öffnung (12) kommunizierenden zentralen Innenraum (11) vom Ringraum (10) trennt.

10. Ringfilterelement nach einem der Ansprüche 3 bis 9,
**dadurch gekennzeichnet,**
- **dass** sich das Rohr (9) von der mit dem Zapfen (5) ausgestatteten Endscheibe (4) bis durch die Mittelscheibe (14) hindurch erstreckt,
- **dass** die Mittelscheibe (14) eine innenliegende Radialdichtung (25) aufweist, die sich am Rohr (9) radial dichtend abstützt.

## Claims

1. A ring filter element for a liquid filter, particularly for an oil filter for purifying lubricant oil, particularly for an internal combustion engine of a motor vehicle, having
- an annularly positioned filter material (2),
- at least one end disk (4), which seals the filter material (2) on its end, and which has a journal (5), which is positioned eccentrically in relation to the lengthwise central axis (3) of the ring filter element (1) and projects outward,
- a discharge channel (6), which penetrates the journal (5) and the associated end disk (4) radially next to the filter material (2) and communicates with an inner chamber (7) of the ring filter element (1) encircled by filter material (2), this inner chamber (7) lying on the clean side of the ring filter element (1),
**characterized in that** a throttle (8) is positioned or implemented at or in an outlet end of the discharge channel (6) or upstream from the discharge channel (6).

2. The ring filter element according to Claim 1 or 2,
**characterized in that** the discharge (6) forms or has a throttle (8).

3. The ring filter element according to Claim 1,
**characterized in that** the ring filter element (1) is implemented as a secondary flow filter.

4. The ring filter element according to Claim 3,
**characterized in that** the secondary flow filter is connectable at an end disk facing away from the journal (5) to a ring filter element implemented as a main flow filter in such a manner that the secondary flow filter and main flow filter are removable from a filter housing (17) together.

5. The ring filter element according to Claim 3 or 4,
**characterized in that**
- the filter material (2) is implemented for filtering a secondary flow,
- the ring filter element (1) has a further filter material (13), which is positioned annularly and coaxially to the lengthwise central axis (3) of the ring filter element (1) and axially neighboring the secondary flow filter material (2) and is implemented for filtering a main flow,
- secondary flow filter material (2) and main flow filter material (13) have a shared middle disk (14).

6. The ring filter element according to one of Claims 3 through 5,
**characterized in that** the discharge channel (6) is dimensioned in regard to its flow resistance in such a manner that a secondary flow flowing through the secondary flow filter is limited to a predetermined volume flow or to a predetermined proportion of a total flow formed by the secondary flow and a main flow.

7. The ring filter element according to one of Claims 3 through 6,
**characterized in that** the ring filter element (1) has an inner frame (28) on which the filter material (2) is supported radially.

8. The ring filter element according to one of Claims 3 through 7,
**characterized in that**
- the ring filter element (1) has a central tube (9),
- an annular chamber (10) is implemented radially between the tube (9) and the filter material (2),
- the discharge channel (6) communicates with the annular chamber (10).

9. The ring filter element according to one of Claims 3 through 8,
**characterized in that**
- the end disk (4) equipped with the journal (5) has a central opening (12),
- the tube (9) separates a central inner chamber (11), which communicates with the central opening (12), from the annular chamber (10).

10. The ring filter element according to one of Claims 3 through 9,
**characterized in that**
- the tube (9) extends from the end disk (4) equipped with the journal (5) up through the middle disk (14),
- the middle disk (14) has an internal radial seal (25), which is supported radially on the tube (9) to form a seal.

## Revendications

1. Élément filtrant annulaire pour un filtre à fluide, en particulier pour un filtre à huile destiné au nettoyage d'huile de lubrification, en particulier pour un moteur à combustion interne d'un véhicule automobile comprenant
- un matériau filtrant (2) disposé de manière annulaire,
- au moins un disque d'extrémité (4) rendant étanche le matériau filtrant (2) frontalement qui présente un tenon (5) dépassant vers l'extérieur, disposé de manière excentrée par rapport à l'axe central longitudinal (3) de l'élément filtrant annulaire (1),
- un canal d'évacuation (6) qui traverse radialement près du matériau filtrant (2) le tenon (5) et le disque d'extrémité (4) associé, et communique avec un espace intérieur (7) entouré du matériau filtrant (2) de l'élément filtrant annulaire (1), cet espace intérieur (7) reposant sur le côté propre de l'élément filtrant annulaire (1),
**caractérisé en ce**
**qu'**un étranglement (8) est disposé ou réalisé sur ou dans une extrémité de sortie du canal d'évacuation (6) ou en amont du canal d'évacuation (6).

2. Élément filtrant annulaire selon la revendication 1 ou 2,
**caractérisé en ce**
**que** l'évacuation (6) forme ou présente un étranglement (8).

3. Élément filtrant annulaire selon la revendication 1,
**caractérisé en ce**
**que** l'élément filtrant annulaire (1) est réalisé en tant que filtre à huile d'écoulement secondaire.

4. Élément filtrant annulaire selon la revendication 3,
**caractérisé en ce**
**que** le filtre à huile d'écoulement secondaire peut être relié sur un disque d'extrémité opposé au tenon (5) à un élément filtrant annulaire réalisé en tant que filtre à huile d'écoulement principal, de telle sorte que le filtre à huile d'écoulement secondaire et le filtre à huile d'écoulement principal puissent être retirés ensemble d'un boîtier de filtre (17).

5. Élément filtrant annulaire selon la revendication 3 ou 4,
**caractérisé en ce**
- **que** le matériau filtrant (2) est réalisé pour filtrer un écoulement secondaire,
- en ce que l'élément filtrant annulaire (1) présente un autre matériau filtrant (13) qui est disposé de manière annulaire et coaxiale par rapport à l'axe central longitudinal (3) de l'élément filtrant annulaire (1) ainsi que de manière axiale au voisinage du matériau filtrant d'écoulement secondaire (2) et est réalisé pour filtrer un écoulement principal,
- en ce que le matériau filtrant d'écoulement secondaire (2) et le matériau filtrant d'écoulement principal (13) présentent un disque médian (14) commun.

6. Élément filtrant annulaire selon l'une quelconque des revendications 3 à 5,
**caractérisé en ce**
**que** le canal d'évacuation (6) est dimensionné en ce qui concerne sa résistance à la traversée d'un écoulement de sorte qu'un écoulement secondaire traversant le filtre à huile d'écoulement secondaire soit limité à un débit volumique prédéterminé ou à une part prédéterminée d'un écoulement total constitué de l'écoulement secondaire et de l'écoulement principal.

7. Élément filtrant annulaire selon l'une quelconque des revendications 3 à 6,
**caractérisé en ce**
**que** l'élément filtrant annulaire (1) présente un corps intérieur (28), sur lequel s'appuie radialement le matériau filtrant (2).

8. Élément filtrant annulaire selon l'une quelconque des revendications 3 à 7,
**caractérisé en ce**
- **que** l'élément filtrant annulaire (1) présente un tube (9) central,
- en ce qu'un espace annulaire (10) est réalisé radialement entre le tube (9) et le matériau filtrant (2),
- en ce que le canal d'évacuation (6) communique avec l'espace annulaire (10).

9. Élément filtrant annulaire selon l'une quelconque des revendications 3 à 8,
**caractérisé en ce**
- **que** le disque d'extrémité (4) équipé du tenon (5) présente une ouverture centrale (12),
- en ce que le tube (9) sépare un espace intérieur (11) central communiquant avec l'ouverture centrale (12) de l'espace annulaire (10).

10. Élément filtrant annulaire selon l'une quelconque des revendications 3 à 9,
**caractérisé en ce**
- **que** le tube (9) s'étend du disque d'extrémité (4) équipé du tenon (5) jusqu'au travers du disque médian (14),
- en ce que le disque médian (14) présente une garniture radiale (25) intérieure qui s'appuie de manière étanche radialement sur le tube (9).
